# EUROPEAN PATENT SPECIFICATION

(11) **EP 3 882 417 B1**
(45) Date of publication and mention of the grant of the patent: **18.10.2023**
(21) Application number: 20382199.6
(22) Date of filing: 16.03.2020
(51) Int. Cl.: E04H 12/08, E04H 12/20, F03D 13/20

(54) **WIND TURBINE**
WINDTURBINE
ÉOLIENNE

(43) Date of publication of application: 22.09.2021
(73) Proprietor: SIEMENS GAMESA RENEWABLE ENERGY INNOVATION & TECHNOLOGY, S.L., 31621 Sarriguren (Navarra) (ES)
(72) Inventor: Saez Anthonisen, Aitor, 48003 Bilbao (ES)
(74) Representative: SGRE-Association

(56) References cited:
- EP-A1- 3 249 138
- WO-A1-2014/033332
- DE-A1-102013 108 692
- DE-A1-102014 100 814
- US-A1- 2019 234 096

## Description

The present invention relates to a wind turbine.

A wind turbine has a tower, a nacelle, which is arranged on top of the tower, a hub with rotor blades being rotatable supported at the nacelle and a generator being provided inside the nacelle and being driven by the hub. The tower can be guyed by means of stay cables that are on one end anchored in the tower and on the other end in the ground.

WO 2017/041806 A1 describes a tower section for a tethered wind turbine tower, comprising a plurality of tubes adapted for receiving a cable there through and fixing said cable at said inner tube end. The tower section may further include an inner stiffening ring and/or an outer stiffening ring.

WO 2016/116107 A1 describes a wind turbine tower configured to support a wind turbine nacelle and a rotor. The tower has a tower wall of an inner surface and an outer surface. The tower is tethered by a number of cables, each cable extending between a first end anchored to an anchoring element and an opposite, second end attached to the tower at an attachment element. Two cables extending from two different anchoring elements are attached to the tower such that longitudinal projection lines from the second ends of the two cables converge at a convergence point, which lies at a location at a certain height and inside the tower wall thickness.

WO 2014/033332 A1 describes a tower construction for a wind turbine. The tower construction has a tower shaft, a foundation, and a transition piece in the area of the upper end of the tower shaft, guying elements being provided which are angled in relation to a longitudinal axis of the tower shaft and which extend radially outside of the exterior shell defined by the tower shaft, by means of which guying elements the tower shaft is guyed at least in some sections, wherein tension members are provided radially inside the exterior shell, by means of which tension members the tower shaft is vertically prestressed at least in some sections, the tower shaft being made of concrete in the area between the transition piece and the foundation.

DE 10 2014 100 814 A1 describes a tower structure for a wind turbine, with a tower shaft, which has a shaft cross-section and a longitudinal axis, as well as several guying elements being inclined to the longitudinal axis of the tower shaft, by means of which the tower shaft is braced at least in sections, wherein the guying elements are fixed to a load introduction point of the tower shaft radially spaced from the longitudinal axis of the tower shaft and are anchored in a foundation soil radially outside the tower shaft.

It is one object of the present invention to provide an improved wind turbine.

Accordingly, a wind turbine, comprising a tower with a plurality of tower sections, a plurality of stay cables for guying the tower, and a plurality of support devices for anchoring the stay cables in at least one of the tower sections is provided, wherein the support devices are arranged completely inside an internal space of the at least one tower section, wherein each support device comprises a bearing plate against which an anchor block of one of the stay cables lies, wherein the bearing plate is inclined toward an axis of symmetry of the at least one tower section in an inclination angle, wherein each support device comprises a first support plate and a second support plate, wherein the support plates are connected to the at least one tower section, and wherein the bearing plate is connected to the support plates.

Because the support devices are arranged inside the internal space of the tower section, transport of the tower section is easier because no parts of the support devices protrude from the internal space.

The tower preferably carries a nacelle with a hub and rotor blades that are connected to the hub. Inside the nacelle is arranged a generator that is driven by the hub. The tower sections are stacked on top of each other. Preferably there is only one tower section that has the support devices. In particular, this tower section is arranged just below a tip of the tower. Each tower section is designed rotation-symmetric toward an axis of symmetry.

In particular, each tower section has an upper flange and an lower flange. The flanges are ring-shaped. Flanges of neighboring tower sections are connected, in particular bolted, to each other. Between the flanges is arranged a cylindrical or tubular section shell that is connected to the flanges. The section shell defines the internal space. The internal space is cylinder-shaped. The section shell has an inner surface that faces the internal space. Preferably, the support devices are connected to this inner surface.

"Guying" or "tethering" the tower in this context means that the stay cables are pre-stressed and reduce the bending moments from the point they are anchored in the tower to a bottom of the tower. The stay cables are at one end anchored to the tower section and at another end to the ground. There can be anchoring elements in the ground. The anchoring elements can be concrete blocks. The support devices are pressed against the inner surface of the tower section by means of the pre-stressed stay cables. In this way, loads on the connections between the support devices and the tower section are distributed more efficiently.

The support devices can be named anchoring devices. That the support devices are arranged "completely" inside the internal space means in this context that no part of the support devices protrudes from the tower section or the internal space. In particular, the internal surface encircles the support devices completely. That means that no section or part of the support devices breaks through the internal surface.

According to an embodiment, the at least one tower section and the support devices are separate parts.

This means that the tower section and the support devices are not formed as a one-part piece like, for example, a cast iron part. The tower section and the support devices are produced as separate part. After producing, the tower section and the support devices are connected to each other.

According to a further embodiment, the support devices are welded and/or bolted against an inner surface of the at least one tower section.

"Bolted" in this context means screwed.

Each support device comprises a bearing plate against which an anchor block of one of the stay cables lies, wherein the bearing plate is inclined toward an axis of symmetry of the at least one tower section in an inclination angle.

Preferably, the bearing plate has a rectangular shape. The anchor block has a ring nut that lies against the bearing plate. The ring nut is disc-shaped. The anchor block has a bolt-shaped basic section. The ring nut is screwed onto the basic section. The anchor blocks are connected to the ends of the stay cables that are arranged within the internal space. The inclination angle can have a value of 45°, for example.

Each support device comprises a first support plate and a second support plate, wherein the support plates are connected to the at least one tower section, wherein the bearing plate is connected to the support plates.

The bearing plate can be welded to the support plates. Alternatively, the bearing plate and the support plates can be produced as a cast part.

According to a further embodiment, the support plates are wedge shaped.

This helps to reduce weight.

According to a further embodiment, the support plates are welded to the at least one tower section.

The support plates lie or rest against the inner surface.

According to a further embodiment, each support device comprises a first flange plate that is connected to the first support plate and a second flange plate that is connected to the second support plate, wherein the flange plates are connected to the at least one tower section.

The flange plates can be welded to the support plates. Preferably, the flange plates are arranged perpendicular toward the support plates.

According to a further embodiment, the flange plates are bolted to the at least one tower section.

The bolted connection can be produced by using screws and/or bolts.

According to a further embodiment, the bearing plate has an opening that receives the anchor block.

The opening can be a circular bore. The anchor block has the cylindrical basic section and the afore mentioned disc-shaped ring nut that is screwed onto the basic section. The ring nut lies against the bearing plate and the basic section is received in the opening.

According to a further embodiment, the at least one tower section has openings through which the stay cables are guided into the internal space.

The openings can be named bores or cutouts. The openings can have an arbitrary shape.

According to a further embodiment, the openings have an elliptic shape.

The stay cables are inclined toward the tower. For this reason, the stay cables run through the openings in an inclined manner. Therefore, an elliptic or oval shape of the openings is advantageous.

According to a further embodiment, the wind turbine further comprises anchoring elements that are anchored in the ground, wherein the stay cables are connected with the anchoring elements.

The anchoring elements can be concrete blocks. The stay cables are pre-stressed between the anchoring elements and the support devices.

According to a further embodiment, at least three stay cables and at least three support devices are provided.

The number of the stay cables and the number of the support devices is the same. There can also be provided four or more stay cables and support devices. The support devices and the stay cables are distributed around the axis of symmetry of the tower section in an equidistant manner.

According to a further embodiment, the support devices are cast, welded and/or bolted parts.

Alternatively, the support devices can be made of fiber reinforced materials.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a perspective view of a wind turbine according to one embodiment;
- Fig. 2: shows a perspective view of a wind turbine rotor blade according to one embodiment;
- Fig. 3: shows a cross-sectional view of a tower section according to one embodiment;
- Fig. 4: shows a perspective view of a support device according to one embodiment;
- Fig. 5: shows a cross-sectional view of a tower section according to another embodiment; and
- Fig. 6: shows a perspective view of a support device according to another embodiment.
In the Figures, like reference numerals designate like or functionally equivalent elements, unless otherwise indicated.

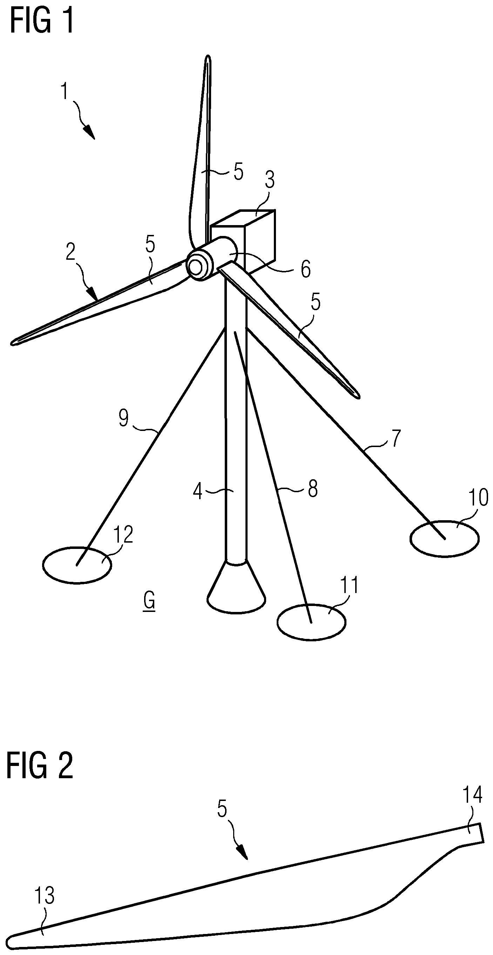

Fig. 1 shows a wind turbine 1 according to one embodiment.

The wind turbine 1 comprises a rotor 2 connected to a generator (not shown) arranged inside a nacelle 3. The nacelle 3 is arranged at the upper end of a tower 4 of the wind turbine 1. The tower 4 has a plurality of tower sections that are arranged on top of each other. The tower 4 can be named wind turbine tower.

The rotor 2 comprises three rotor blades 5. The rotor blades 5 are connected to a hub 6 of the wind turbine 1. Rotors 2 of this kind may have diameters ranging from, for example, 30 to 160 meters or even more. The rotor blades 5 are subjected to high wind loads. At the same time, the rotor blades 5 need to be lightweight. For these reasons, rotor blades 5 in modern wind turbines 1 are manufactured from fiber-reinforced composite materials. Therein, glass fibers are generally preferred over carbon fibers for cost reasons. Oftentimes, glass fibers in the form of unidirectional fiber mats are used.

The wind turbine 1 has stay cables 7 to 9 that are fixed to the tower 4 at a first end thereof and that are fixed to anchoring elements 10 to 12 at a second end thereof. The number of stay cables 7 to 9 is arbitrary. However, there are provided at least three stay cables 7 to 9. Each stay cable 7 to 9 has one anchoring element 10 to 12. This means that the number of stay cables 7 to 9 is the same as the number of anchoring elements 10 to 12. The anchoring elements 10 to 12 are anchored in the ground G.

The stay cables 7 to 9 are anchored to the tower 4 and to the anchoring elements 10 to 12 to transmit loads from the tower 4 to the anchoring elements 10 to 12. In other words, the tower 4 is guyed by means of the stay cables 7 to 9. For this reason, the tower 4 can be named guyed tower. The solution to fix the stay cables 7 to 9 to the tower 4 has a direct impact on the design of the tower 4. In particular, it affects a tower shell thickness, the number of tower sections and the layout of internal components. It also has an effect on the transportability of the tower 4 as well as the assembly strategy and time.

Fig. 2 shows a rotor blade 5 according to one embodiment.

The rotor blade 5 comprises an aerodynamically designed portion 13, which is shaped for optimum exploitation of the wind energy and a blade root 14 for connecting the rotor blade 5 to the hub 6.

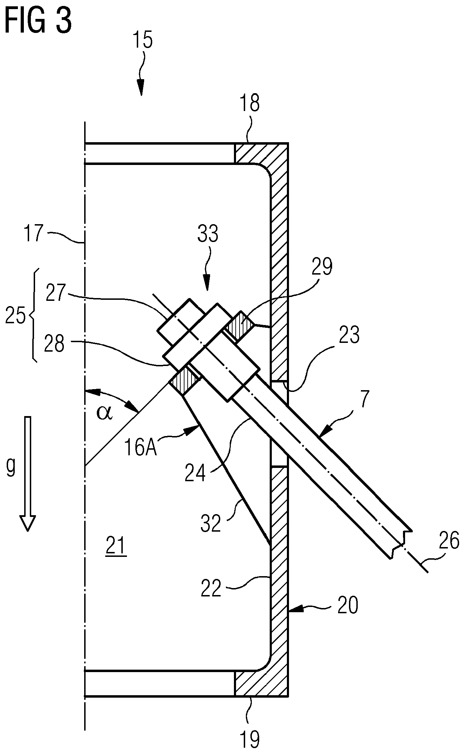

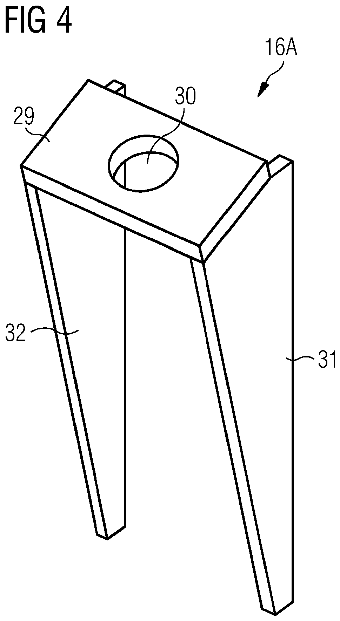

Fig. 3 shows a cross-sectional view of a tower section 15 according to one embodiment. Fig. 4 shows a perspective view of a support device 16A according to one embodiment. In the following, reference is made to Figs. 3 and 4 at the same time.

As mentioned before, the tower 4 comprises a plurality of tower sections 15 that are arranged on top of each other. The tower section 15 has a cylindrical or tubular shape. The tower section 15 has an axis of symmetry 17. The axis of symmetry 17 is arranged parallel toward a direction of gravity g. The tower section 15 is designed rotation-symmetric toward the axis of symmetry 17. The support device 16A can be named anchoring device.

The tower section 15 has an upper flange 18 and a lower flange 19. The flanges 18, 19 are ring-shaped and are designed rotation-symmetric toward the axis of symmetry 17. The flanges 18, 19 are used to connect the tower section 15 to neighboring tower sections (not shown). The flanges 18, 19 can be bolted together for this purpose. The tower section 15 can be made of metal. Alternatively, the tower section 15 can be made of fiber-reinforced materials.

Between the flanges 18, 19 is arranged a section shell 20. The section shell 20 has a cylindrical or tubular shape and is designed rotation-symmetric toward the axis of symmetry 17. Preferably, the section shell 20 and the flanges 18, 19 are formed integral. "Integral" in this context means that the section shell 20 and the flanges 18, 19 are designed as one piece. For example, the section shell 20 and the flanges 18, 19 can be welded together. Alternatively, the tower section 15 is a cast part so that the section shell 20 is integrally connected to the flanges 18, 19. The tower section 15 defines an internal space 21 of the tower section 15. An inner surface 22 of the section shell 20 faces the internal space 21.

The section shell 20 has an opening 23 through which the stay cable 7 is guided without touching a rim of the opening 23. The opening 23 can be a bore or a cutout. Preferably, the opening 23 has an oval or elliptical shape. Each stay cable 7 to 9 has its own opening 23. This means the number of openings 23 is the same as the number of stay cables 7 to 9. There can be provided three openings 23 that are distributed around the axis of symmetry 17 in an evenly manner. This means that a peripheral angle between neighboring openings 23 can be 120°.

As mentioned before, the stay cable 7 is guided through the opening 23 into the internal space 21. This means that an end 24 of the stay cable 7 is placed inside the internal space 21. The end 24 of the stay cable 7 is provided with an anchor block 25 that anchors the end 24 in the internal space 21 of the tower section 15. The anchor block 25 is designed rotation symmetric toward an axis of symmetry 26. The anchor block 25 has a basic section 27 that is cylinder-shaped and a ring nut 28 that has a disc-shape. The ring nut 28 is screwed onto the basic section 27. In this way, the stay cable 7 can be pre-tensioned. The ring nut 28 is connected to the basic section 27. However, the basic section 27 and the ring nut 28 are separate parts.

The anchor block 25, in particular the ring nut 28, lies against the support device 16A so that the stay cable 7 can be pre-stressed. The support device 16A is a part that is not integrally formed together with the tower section 15. However, the support device 16A can be welded or bolted against the inner surface 22.

The support device 16A has a bearing plate 29. The bearing plate 29 has an opening 30 that receives the anchor block 25, in particular the basic section 27 of the anchor block 25. The ring nut 28 lies against the bearing plate 29. The opening 30 can be a circular bore. The bearing plate 29 is arranged perpendicular toward the axis of symmetry 26. "Perpendicular" in this context means an angle of 90° ± 10°, preferably of 90° ± 5°, more preferably of 90° ± 3°, more preferably of 90° ± 1°, more preferably of 90° ± 0,3° more preferably of exactly 90°.

The bearing plate 29 is inclined toward the axis of symmetry 17 in an inclination angle α. For example, the inclination angle α can have a value of 45°. The bearing plate 29 has a rectangular shape. The bearing plate 29 is connected to two support plates 31, 32. The support plates 31, 32 are wedgeshaped. The support plates 31, 32 can be welded to the bearing plate 29. Alternatively, the support device 16A can be formed as an integral part. In this case, the support device 16A can be produced by bending a planar sheet. Further, the support device 16A can be a cast part. In this case, the support device 16A can be a cast iron part.

Preferably, the support device 16A is made of metal. The support device 16A is welded to the section shell 20, in particular to the inner surface 22 of the section shell 20. All support devices 16A, the stay cables 7 to 9 with the anchor blocks 25 and the anchoring elements 10 to 12 together form an anchoring system 33 of the wind turbine 1.

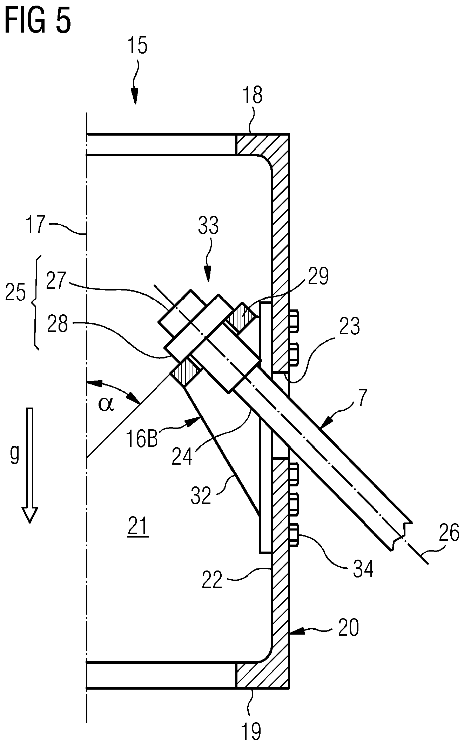

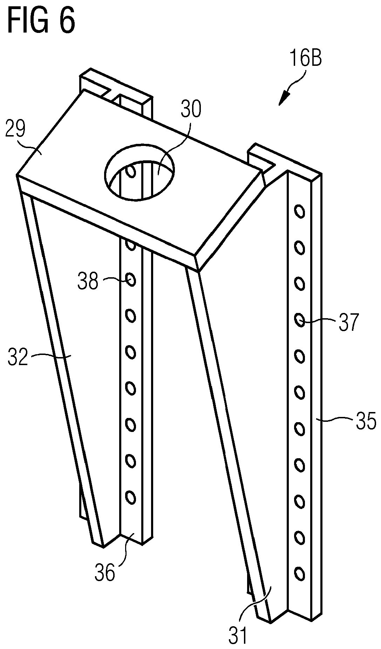

Fig. 5 shows a cross-sectional view of a tower section 15 according to another embodiment. Fig. 6 shows a perspective view of a support device 16B according to another embodiment. In the following, reference is made to Figs. 5 and 6 at the same time.

The support device 16B differs from the support device 16A only in that the support device 16B is not welded to the section shell 20 but is bolted thereto. For this reason, a plurality of bolts 34 is provided of which only one has a reference sign in Fig. 5. The section shell 20 has openings ore bores through which the bolts 34 are guided.

The support device 16B has flange plates 35, 36 that are connected to the support plates 31, 32. The flange plates 35, 36 can be welded or bolted to the support plates 31, 32. Alternatively, the support device 16B can be a cast part. The flange plates 35, 36 lie against the inner surface 22 of the section shell 20. The flange plates 35, 36 are arranged perpendicular to the support plates 31, 32. The flange plates 35, 36 have bores or openings 37, 38 for receiving the bolts 34.

The function and the advantages of the support device 16A, 16B are as follows. The way the anchoring system 33 is designed makes the solution more efficient in terms of labor and costs. The support device 16A, 16B leans on the section shell 20. Therefore the section shell 20 bears most of the load which allows the type of connection that is used to connect the support device 16A, 16B to the section shell 20, in particular welds or bolts, to work under lower loads.

Moreover, the bolted solution used with the support device 16B does not limit the fatigue behavior of the section shell 20, as there are no welds between the support device 16B and the section shell 20. Internal anchorages as the support devices 16A, 16B allow to stress the stay cables 7 to 9 from the internal space 21 of the tower section 15. In this way, the operation is more controlled than in the case of prestressing the stay cables 7 to 9 on the ground anchoring elements 10 to 12. In the latter case, the stressing workers are far from each other, which makes stressing more difficult. It is also possible to monitor the stay cables 7 to 9 by connecting sensors to the anchor blocks 25 and/or the support devices 16A, 16B. This means that the anchoring system 33 can have sensors.

The support device 16A, 16B lies against the section shell 20 and the load of the stay cables 7 to 9 tends to press the support device 16A, 16B against the section shell 20. Hence, a horizontal component of the load is absorbed mainly by the section shell 20 instead of by the connection elements, in particular welds or bolts, which are used to connect the support devices 16A, 16B to the section shell 20. Besides, due to the layout of the support device 16A, 16B, the loads of the stay cables 7 to 9 are divided on two surfaces, namely to the two support plates 31, 32 or the two flange plates 35, 36. This reduces stress in the section shell 20. Hence, a wall thickness of the section shell 20 can be reduced.

If a bolted connection between the support device 16B and the tower section 15 is used, the fatigue calculation of the section shell 20 is not limited by welds, which will be more restrictive than bolt holes which have less impact on the fatigue resistance. Transport labor for the tower section 15 is reduced since the support device 16A, 16B is placed inside the internal space 21. Lower project costs can be achieved.

Although the present invention has been described in accordance with preferred embodiments, it is obvious for the person skilled in the art that modifications are possible in all embodiments.

## Claims

1. A wind turbine (1), comprising a tower (4) with a plurality of tower sections (15), a plurality of stay cables (7 - 9) for guying the tower (4), and a plurality of support devices (16A, 16B) for anchoring the stay cables (7 - 9) in at least one of the tower sections (15), wherein the support devices (16A, 16B) are arranged completely inside an internal space (21) of the at least one tower section (15), wherein each support device (16A, 16B) comprises a bearing plate (29) against which an anchor block (25) of one of the stay cables (7 - 9) lies, wherein the bearing plate (29) is inclined toward an axis of symmetry (17) of the at least one tower section (15) in an inclination angle (α), **characterized in that** each support device (16A, 16B) comprises a first support plate (31) and a second support plate (32), wherein the support plates (31, 32) are connected to the at least one tower section (15), and wherein the bearing plate (29) is connected to the support plates (31, 32).

2. The wind turbine according to claim 1, wherein the at least one tower section (15) and the support devices (16A, 16B) are separate parts.

3. The wind turbine according to claim 1 or 2, wherein the support devices (16A, 16B) are welded and/or bolted against an inner surface (22) of the at least one tower section (15).

4. The wind turbine according to one of claims 1 - 3, wherein the support plates (31, 32) are wedge shaped.

5. The wind turbine according to one of claims 1 - 4, wherein the support plates (31, 32) are welded to the at least one tower section (15).

6. The wind turbine according to one of claims 1 - 5, wherein each support device (16A, 16B) comprises a first flange plate (35) that is connected to the first support plate (31) and a second flange plate (36) that is connected to the second support plate (32), and wherein the flange plates (35, 36) are connected to the at least one tower section (15).

7. The wind turbine according to claim 6, wherein the flange plates (35, 36) are bolted to the at least one tower section (15) .

8. The wind turbine according to one of claims 1 - 7, wherein the bearing plate (29) has an opening (30) that receives the anchor block (25).

9. The wind turbine according to one of claims 1 - 8, wherein the at least one tower section (15) has openings (23) through which the stay cables (7 - 9) are guided into the internal space (21).

10. The wind turbine according to claim 9, wherein the openings (23) have an elliptic shape.

11. The wind turbine according to one of claims 1 - 10, further comprising anchoring elements (10 - 12) that are anchored in the ground (G), wherein the stay cables (7 - 9) are connected with the anchoring elements (10 - 12).

12. The wind turbine according to one of claims 1 - 11, wherein at least three stay cables (7 - 9) and at least three support devices (16A, 16B) are provided.

13. The wind turbine according to one of claims 1-12, wherein the support devices (16A, 16B) are cast, welded and/or bolted parts.

## Patentansprüche

1. Windkraftanlage (1), umfassend einen Turm (4) mit mehreren Turmabschnitten (15), mehreren Schrägseilen (7-9) zum Verspannen des Turms (4) und mehrere Stützvorrichtungen (16A, 16B) zum Verankern der Schrägseile (7-9) in mindestens einem der Turmabschnitte (15), wobei die Stützvorrichtungen (16A, 16B) vollständig innerhalb eines Innenraums (21) des mindestens einen Turmabschnitts (15) angeordnet sind, wobei jede Stützvorrichtung (16A, 16B) eine Lagerplatte (29) umfasst, an der ein Ankerblock (25) eines der Schrägseile (7-9) anliegt, wobei die Lagerplatte (29) zu einer Symmetrieachse (17) des mindestens einen Turmabschnitts (15) in einem Neigungswinkel (a) geneigt ist, **dadurch gekennzeichnet, dass** jede Stützvorrichtung (16A, 16B) eine erste Stützplatte (31) und eine zweite Stützplatte (32) umfasst, wobei die Stützplatten (31, 32) mit dem mindestens einen Turmabschnitt (15) verbunden sind und wobei die Lagerplatte (29) mit den Stützplatten (31, 32) verbunden ist.

2. Windkraftanlage nach Anspruch 1, wobei der mindestens eine Turmabschnitt (15) und die Stützvorrichtungen (16A, 16B) separate Teile sind.

3. Windkraftanlage nach Anspruch 1 oder 2, wobei die Stützvorrichtungen (16A, 16B) an einer Innenfläche (22) des mindestens einen Turmabschnitts (15) verschweißt und/oder verschraubt sind.

4. Windkraftanlage nach einem der Ansprüche 1-3, wobei die Stützplatten (31, 32) keilförmig sind.

5. Windkraftanlage nach einem der Ansprüche 1-4, wobei die Stützplatten (31, 32) an dem mindestens einen Turmabschnitt (15) verschweißt sind.

6. Windkraftanlage nach einem der Ansprüche 1-5, wobei jede Stützvorrichtung (16A, 16B) eine erste Flanschplatte (35), die mit der ersten Stützplatte (31) verbunden ist, und eine zweite Flanschplatte (36), die mit der zweiten Stützplatte (32) verbunden ist, umfasst und wobei die Flanschplatten (35, 36) mit dem mindestens einen Turmabschnitt (15) verbunden sind.

7. Windkraftanlage nach Anspruch 6, wobei die Flanschplatten (35, 36) an dem mindestens einen Turmabschnitt (15) verschraubt sind.

8. Windkraftanlage nach einem der Ansprüche 1-7, wobei die Lagerplatte (29) eine Öffnung (30) aufweist, die den Ankerblock (25) aufnimmt.

9. Windkraftanlage nach einem der Ansprüche 1-8, wobei der mindestens eine Turmabschnitt (15) Öffnungen (23) aufweist, durch die die Schrägseile (7-9) in den Innenraum (21) geführt werden.

10. Windkraftanlage nach Anspruch 9, wobei die Öffnungen (23) eine elliptische Form aufweisen.

11. Windkraftanlage nach einem der Ansprüche 1-10, ferner umfassend Verankerungselemente (10-12), die im Boden (G) verankert sind, wobei die Schrägseile (7-9) mit den Verankerungselementen (10-12) verbunden sind.

12. Windkraftanlage nach einem der Ansprüche 1-11, wobei mindestens drei Schrägseile (7-9) und mindestens drei Stützvorrichtungen (16A, 16B) vorgesehen sind.

13. Windkraftanlage nach einem der Ansprüche 1-12, wobei die Stützvorrichtungen (16A, 16B) gegossene, verschweißte und/oder verschraubte Teile sind.

## Revendications

1. Éolienne (1), comprenant une tour (4) avec une pluralité de sections de tour (15), une pluralité de haubans (7 - 9) pour haubaner la tour (4), et une pluralité de dispositifs de support (16A, 16B) pour ancrer les haubans (7 - 9) dans au moins une des sections de tour (15), dans laquelle les dispositifs de support (16A, 16B) sont disposés complètement à l'intérieur d'un espace interne (21) de la au moins une section de tour (15), dans laquelle chaque dispositif de support (16A, 16B) comprend une plaque de roulement (29) contre laquelle repose un bloc d'ancrage (25) de l'un des haubans (7 - 9), la plaque de roulement (29) étant inclinée vers un axe de symétrie (17) de la au moins une section de tour (15) dans un angle d'inclinaison (a), **caractérisée en ce que** chaque dispositif de support (16A, 16B) comprend une première plaque de support (31) et une deuxième plaque de support (32), dans lequel les plaques de support (31, 32) sont reliées à la au moins une section de tour (15), et dans lequel la plaque de roulement (29) est reliée aux plaques de support (31, 32).

2. Éolienne selon la revendication 1, dans laquelle la au moins une section de tour (15) et les dispositifs de support (16A, 16B) sont des pièces séparées.

3. Éolienne selon la revendication 1 ou 2, dans laquelle les dispositifs de support (16A, 16B) sont soudés et/ou boulonnés contre une surface intérieure (22) de la au moins une section de tour (15).

4. Éolienne selon l'une des revendications 1 à 3, dans laquelle les plaques de support (31, 32) sont en forme de coin.

5. Éolienne selon l'une des revendications 1 à 4, dans laquelle les plaques de support (31, 32) sont soudées à la au moins une section de tour (15).

6. Éolienne selon l'une des revendications 1 à 5, dans laquelle chaque dispositif de support (16A, 16B) comprend une première plaque de bride (35) qui est reliée à la première plaque de support (31) et une deuxième plaque de bride (36) qui est reliée à la deuxième plaque de support (32), et dans laquelle les plaques de bride (35, 36) sont reliées à la au moins une section de tour (15).

7. Éolienne selon la revendication 6, dans laquelle les plaques de bride (35, 36) sont boulonnées à la au moins une section de tour (15).

8. Éolienne selon l'une des revendications 1 à 7, dans laquelle la plaque de roulement (29) présente une ouverture (30) recevant le bloc d'ancrage (25).

9. Éolienne selon l'une des revendications 1 à 8, dans laquelle la au moins une section de tour (15) a des ouvertures (23) à travers lesquelles les haubans (7 - 9) sont guidés dans l'espace intérieur (21).

10. Éolienne selon la revendication 9, dans laquelle les ouvertures (23) ont une forme elliptique.

11. Éolienne selon l'une des revendications 1 à 10, comprenant en outre des éléments d'ancrage (10 - 12) qui sont ancrés dans le sol (G), dans laquelle les haubans (7 - 9) sont reliés aux éléments d'ancrage (10 - 12).

12. Éolienne selon l'une des revendications 1 à 11, dans laquelle sont prévus au moins trois haubans (7 - 9) et au moins trois dispositifs de support (16A, 16B).

13. Éolienne selon l'une des revendications 1 à 12, dans laquelle les dispositifs de support (16A, 16B) sont des pièces moulées, soudées et/ou boulonnées.
